# FASCICULE DE BREVET EUROPEEN

(11) **EP 3 850 201 B1**
(45) Date de publication et mention de la délivrance du brevet: **22.05.2024**
(21) Numéro de dépôt: 19778578.5
(22) Date de dépôt: 30.08.2019
(51) Int. Cl.: F02B 19/02, F02B 19/06, F02B 19/12, F02B 19/18, F02B 19/10, F02P 13/00

(54) **DISPOSITIF DE RAPPEL MAGNETIQUE DE CLAPET**
MAGNETISCHE VENTILRÜCKSTELLVORRICHTUNG
MAGNETIC VALVE RETURN DEVICE

(30) Priorité: 10.09.2018 FR 1858111
(43) Date de publication de la demande: 21.07.2021
(73) Titulaire: Rabhi, Vianney, 69006 Lyon (FR)
(72) Inventeur: Rabhi, Vianney, 69006 Lyon (FR)
(74) Mandataire: Vuillermoz, Bruno
(86) Numéro de dépôt international: PCT/FR2019/052006
(87) Numéro de publication internationale: WO 2020/053501

(56) Documents cités:
- EP-A1- 0 396 325
- EP-A2- 0 588 593
- WO-A1-2011/116631
- WO-A2-01/55568
- DE-A1-102009 049 755
- FR-A1- 3 061 743
- US-A1- 2017 241 380

## Description

La présente invention a pour objet un dispositif de rappel magnétique de clapet prévu pour une préchambre d'allumage à clapet ou accessoirement, d'une bougie d'allumage à électrode navette, ladite préchambre et ladite bougie étant elles-mêmes prévues pour allumer une charge principale introduite dans la chambre de combustion d'un moteur thermique à combustion interne, au moyen d'une charge pilote mise à feu par une étincelle.

On connaît la demande de brevet N° FR 1760264 relative à une préchambre d'allumage à clapet qui a été publiée le 14 juin 2018, et celle N° FR 1662254 relative à une bougie d'allumage à électrode-navette publiée le 13 juillet 2018. Les deux dites demandes appartiennent au demandeur.

Les inventions relatives aux demandes de brevet FR 1750264 et FR 1662254 s'appliquent à tout moteur alternatif à allumage commandé de quelque type que ce soit dont la charge principale est fortement diluée avec de l'air frais ou avec des gaz d'échappement re-circulés préalablement refroidis. La dilution de la charge principale à l'air frais ou aux gaz d'échappement refroidis permet d'augmenter le rendement thermodynamique moyen et/ou maximal dudit moteur et donc, de réduire la consommation de carburant dudit moteur à même travail produit.

L'objectif desdites inventions est de produire un allumage súr et une combustion rapide de charges principales fortement diluées, seul un tel allumage et une telle combustion permettant d'obtenir les gains en rendement recherchés.

Les dispositifs que décrivent les demandes FR 1750264 et FR 1662254 ~ bien que produisant chacun un résultat différent - sont basés sur un principe fondateur similaire. Par commodité. nous-nous concentrerons donc ici sur la préchambre d'allumage à clapet objet de la demande de brevet N° FR 1750264.

On note que selon la demande de brevet N° FR 1750264, la chambre de combustion du moteur alternatif à allumage commandé qui reçoit l'invention est reliée par un conduit de stratification à une cavité de stratification aménagée dans la culasse dudit moteur.

D'autres dispositifs sont connus des documents DE102009049755, WO 01/55568 A2, EP 0 588 593 A2, WO 2011/116631 A1, EP 0 396 325 A1 et US 2017/241380 A1.

Un injecteur de stratification débouche dans ladite cavité de stratification dans laquelle il peut injecter une charge pilote constituée d'un mélange comburant-carburant gazeux facilement inflammable préalablement mis sous pression par des moyens de compression. Ladite charge pilote est utilisée pour déclencher la combustion d'une charge principale après que cette dernière ait été introduite dans la chambre de combustion du moteur alternatif à allumage commandé par au moins une soupape d'admission, puis comprimée.

Le déclenchement de la combustion de la charge principale s'opère par la mise à feu de la charge pilote par des moyens d'allumage, ces derniers pouvant prendre la forme d'une bougie d'allumage connue en soi tandis qu'un arc électrique peut être formé entre les deux électrodes de ladite bougie.

Pour donner le plus d'efficacité possible à l'énergie libérée par la combustion de la charge pilote à déclencher la combustion de la charge principale, l'invention relative à la demande de brevet N° FR 1750264 prévoit notamment un clapet de stratification.

Ledit clapet peut soit venir au contact d'un siège d'obturation de clapet aménagé dans le conduit de stratification afin d'obturer ce dernier et séparer de manière étanche la cavité de stratification de la chambre de combustion, soit venir au contact d'un siège d'ouverture de clapet également aménagé dans le conduit de stratification, et former une préchambre d'allumage par torche par laquelle la cavité de stratification est mise en relation avec la chambre de combustion via des orifices d'éjection des gaz qui débouchent dans ladite chambre.

A la lecture de la demande de brevet N° FR 1750264, on remarque que c'est la différence entre la pression qui règne dans la cavité de stratification et celle qui règne dans la chambre de combustion qui fait que le clapet repose sur le siège d'obturation de clapet ou sur le siège d'ouverture de clapet.

En effet, si la pression qui règne dans la chambre de combustion est supérieure à celle qui règne dans la cavité de stratification, le clapet vient se plaquer sur le siège d'obturation de clapet avec lequel il coopère de sorte à interdire aux gaz contenus dans la chambre de combustion de pénétrer dans la cavité de stratification.

Si au contraire, la pression qui règne dans la chambre de combustion est inférieure à celle qui règne dans la cavité de stratification, ledit clapet vient se plaquer sur le siège d'ouverture de clapet avec lequel il coopère de sorte à former une préchambre d'allumage par torche, et à mettre en communication la cavité de stratification avec la chambre de combustion via les orifices d'éjection des gaz que présente ladite préchambre en sa périphérie.

A la lecture de la demande de brevet N° FR 1750264, on comprend aussi qu'il est avantageux que le volume que forment ensemble la cavité de stratification et le conduit de stratification soit très petit par rapport au volume de la chambre de combustion du moteur à allumage commandé. En effet, la compression préalable de la charge pilote par les moyens de compression prévus dans ladite demande est dispendieux en énergie et réduit le rendement global du moteur à allumage commandé. Il faut donc minimiser la masse et la pression de ladite charge pilote.

Toutefois, on remarque qu'un faible volume formé par la cavité de stratification et le conduit de stratification implique un faible débit d'air disponible pour manœuvrer le clapet lorsque débute la compression par le piston du moteur des gaz contenus dans la chambre principale,
Or, à ce moment précis, il est impératif que ledit clapet vienne le plus rapidement possible se plaquer sur le siège d'obturation de clapet avec lequel il coopère, ceci pour interdire aux gaz contenus dans la chambre de combustion de pénétrer dans le conduit de stratification.

Pour que le clapet vienne effectivement se plaquer sur le siège d'obturation de clapet dans un temps suffisamment court malgré le faible volume formé par la cavité de stratification et le conduit de stratification, il est nécessaire de prévoir de très petits orifices d'éjection des gaz. En effet, lesdits orifices doivent être suffisamment petits et constituer un frein suffisamment efficace au passage des gaz depuis la chambre de combustion vers la cavité de stratification, ceci pour maximiser l'écart de pression entre ladite chambre et ladite cavité et permettre la manœuvre du clapet.

C'est pourquoi la description du fonctionnement de l'invention de la demande de brevet N° FR 1750264 fait état d'un diamètre des orifices d'éjection des gaz qui vaut douze centièmes de millimètre tandis que la course totale maximale que peut parcourir le clapet de stratification entre le siège d'obturation de clapet et le siège d'ouverture de clapet vaut quinze centièmes de millimètre.

Un diamètre aussi petit est certes pris à titre d'exemple non-limitatif. Toutefois, il révèle la nécessité de générer une différence de pression suffisante entre d'une part, la face côté cavité du clapet qui est soumise à la pression des gaz régnant dans la cavité de stratification, et d'autre part, la face côté chambre dudit clapet soumise à la pression des gaz régnant dans la chambre de combustion.

Car en effet, la description du fonctionnement de l'invention figurant dans la demande de brevet N° FR 1750264 expose à titre d'exemple que la charge pilote peut contenir seulement un virgule six pourcent du carburant que contient la charge principale. Ceci conduit à un très faible volume total formé par la cavité de stratification et le conduit de stratification. Ledit faible volume implique que peu de débit de gaz s'établit entre la chambre principale et la cavité de stratification lors de la compression des gaz contenus dans la chambre principale. C'est pourquoi, des orifices d'éjection des gaz de très petit diamètre sont nécessaires pour produire un effort suffisant pour manoeuvrer le clapet.

Car en effet, des orifices d'éjection des gaz de gros diamètre auraient pour conséquence de laisser entrer trop de gaz dans la cavité de stratification en provenance de la chambre principale directement via lesdits orifices. Ce débit excessif établi en parallèle de celui nécessaire au déplacement du clapet se ferait au détriment de la différence entre la pression appliquée sur la face côté cavité dudit clapet, et celle appliquée sur la face côté chambre dudit clapet. Au-delà d'un certain diamètre des orifices d'éjection des gaz, ledit clapet ne peut plus être manœuvré.

Pour autant, des orifices d'éjection des gaz de très petit diamètre présentent un inconvénient majeur. En effet, lorsque la charge pilote est mise à feu dans la cavité de stratification, la combustion qui en résulte fait brusquement augmenter la pression dans ladite cavité. Ceci a pour effet de repousser le clapet et de plaquer ce dernier sur le siège d'ouverture de clapet avec lequel il coopère.

Ainsi maintenu en contact étanche avec ledit siège, ledit clapet forme la préchambre d'allumage par torche avec le conduit de stratification de sorte que les gaz chauds de la charge pilote peuvent s'échapper sous forme de torches portées à haute température via les orifices d'éjection des gaz, lesdites torches pénétrant alors dans le volume de la chambre de combustion du moteur pour y allumer la charge principale.

Pour garantir une combustion rapide de ladite charge principale et maximiser le rendement du moteur à allumage commandé, il est nécessaire que lesdites torches formées de gaz chauds pénètrent suffisamment dans la charge principale au point d'atteindre les limites périphériques de la chambre de combustion. Or, à même pénétration desdites torches, la pression à produire dans la préchambre d'allumage par torche est d'autant plus importante que le diamètre des orifices d'éjection des gaz est petit.

Si les orifices d'éjection des gaz sont très petits, il faut produire une pression très élevée dans la préchambre d'allumage par torche pour générer des torches de gaz brûlant suffisamment pénétrantes. Pour cela, il faut que l'injecteur de stratification introduise préalablement la charge pilote dans la cavité de stratification à une pression très élevée laquelle implique que les moyens de compression consomment une énergie élevée, Ainsi, de très petits orifices d'éjection des gaz réduisent le potentiel de l'invention de la demande de brevet N° FR 1750264 à améliorer le rendement du moteur à allumage commandé qui la reçoit.

La perte de rendement n'est d'ailleurs pas le seul inconvénient de très petits orifices d'éjection des gaz. pourtant indispensables à la bonne manœuvrabilité du clapet. En effet, la pression élevée survenue brutalement après l'allumage de la charge pilote par la bougie d'allumage a pour effet de plaquer violemment le clapet sur le siège d'ouverture de clapet avec lequel il coopère. Le choc qui en résulte compromet la longévité à la fois dudit clapet et dudit siège, et peut même conduire à la destruction prématurée dudit clapet et dudit siège.

Ceci est d'autant plus vrai que, en début de compression du moteur à allumage commandé, pour que la pression manœuvre le clapet le plus efficacement possible, on a intérêt à minimiser la surface du siège d'ouverture de clapet, ceci pour maximiser la surface libre qu'expose la face côté chambre du clapet à la pression des gaz contenus dans la chambre de combustion. En effet, pour décoller ledit clapet dudit siège, la pression desdits gaz ne s'exerce que sur ladite surface libre.

Or, minimiser la surface du siège d'ouverture de clapet augmente la puissance spécifique à la surface du choc survenant entre le clapet et ledit siège, ladite puissance pouvant par exemple s'exprimer en milli joules par millimètre carré.

On remarque d'ailleurs qu'en pratique, rien n'amortit le choc le clapet et le siège d'ouverture de clapet, ce qui aggrave encore les conséquences destructrices dudit choc tant pour ledit clapet que pour ledit siège.

Ainsi, la conception de la préchambre d'allumage à clapet selon la demande de brevet N° FR 1750264 ne peut résulter que d'un compromis entre d'une part, le diamètre des orifices d'éjection des gaz et la surface du siège d'ouverture de clapet nécessaires à la manoeuvre du clapet, et d'autre part, le rendement du moteur à allumage commandé et la durée de vie du clapet.

C'est pour sortir dudit compromis et donc, permettre de maximiser le rendement de tout moteur à allumage commandé qui reçoit la préchambre d'allumage à clapet selon la demande de brevet N° FR 1750264 sans compromettre ni la manœuvrabilité ni la durée de vie du clapet que le dispositif de rappel magnétique de clapet - suivant l'invention et selon un mode particulier de réalisation - permet :
- De ramener dans tous les cas - lorsque débute la compression par la piston du moteur des gaz contenus dans la chambre principale - le clapet au contact du siège d'obturation de clapet avec lequel il coopère, ceci même si seul un faible débit d'air est disponible pour manoeuvrer ledit clapet ;
- D'amortir le choc entre le clapet et le siège d'ouverture de clapet avec lequel il coopère, ceci sans compromettre la manœuvrabilité dudit clapet.

Tenant compte de ce qui précède, le dispositif de rappel magnétique de clapet - suivant l'invention et selon un mode particulier de réalisation - permet donc :
- De déterminer sur le seul critère de meilleur rendement du moteur à allumage commandé le diamètre des orifices d'éjection des gaz, le volume total formé par la cavité de stratification et le conduit de stratification, et la pression d'injection de la charge pilote dans ladite cavité, ceci sans la double contrainte de manœuvrabilité et de durabilité du clapet :
- De maximiser le rendement du moteur à allumage commandé et la durée de vie du clapet.

Tout comme la préchambre d'allumage à clapet objet de la demande de brevet N° FR 1750264 ou la bougie d'allumage à électrode-navette objet de la demande de brevet N° FR 1662254 auxquelles il s'adresse, le dispositif de rappel magnétique de clapet est prévu peu cher à fabriquer en grande série pour rester compatible avec les contraintes économiques de la plupart des applications auxquelles il se destine, y-compris automobiles.

Il est entendu que le dispositif de rappel magnétique de clapet selon l'invention peut s'appliquer à tout moteur à allumage commandé à combustion interne rotatif ou alternatif, quel qu'en soit le type, quel que soit le carburant gazeux, liquide ou solide qu'il consomme, et que sa charge principale soit diluée avec de l'EGR refroidi ou non, avec un gaz neutre de quelque nature que ce soit, ou avec un gaz riche en oxygène ou en tout autre comburant.

Il est aussi entendu que la charge pilote prévue pour mettre à feu la charge principale de tout moteur à allumage commandé qui reçoit le dispositif de rappel magnétique de clapet selon l'invention peut contenir un carburant et/ou un comburant différent du carburant et/ou comburant qui constitue ladite charge principale.

Les autres caractéristiques de la présente invention ont été décrites dans la description et dans les revendications secondaires dépendantes directement ou indirectement de la revendication principale.

Le dispositif de rappel magnétique de clapet suivant la présente invention est prévu pour une préchambre d'allumage à clapet pour moteur à combustion interne ce dernier comportant une culasse qui coiffe un cylindre pour former avec un piston une chambre de combustion dans laquelle peut être introduite une charge principale, ladite culasse recevant une cavité de stratification dans laquelle débouche d'une part, un injecteur de stratification qui peut injecter une charge pilote et d'autre part, des moyens d'allumage, ladite cavité étant reliée par un conduit de stratification à la chambre de combustion cependant qu'un clapet de stratification peut soit obturer ledit conduit et isoler la cavité de stratification de la chambre de combustion une face côté cavité que présente ledit clapet reposant alors sur un siège d'obturation de clapet via une portée de clapet côté cavité, soit former avec ledit conduit une préchambre d'allumage par torche qui met en communication la cavité de stratification avec la chambre de combustion par fintermédiaire d'au moins un orifice d'éjection des gaz que comporte ladite préchambre, une face côté chambre que présente ledit clapet reposant en ce cas sur un siège d'ouverture de clapet via une portée de clapet côté chambre, ledit dispositif comprenant :
- Au moins un matériau magnétique qui constitue en tout ou partie le clapet de stratification et le conduit de stratification ;
- Au moins une source de champ magnétique dont le flux magnétique traverse le clapet de stratification et le conduit de stratification de sorte à magnétiser ledit clapet et ledit conduit.

Le dispositif de rappel magnétique de clapet suivant la présente invention comprend une source de champ magnétique qui est un aimant permanent.

Le dispositif de rappel magnétique de clapet suivant la présente invention comprend une source de champ magnétique qui est une bobine de fil conducteur dans laquelle peut circuler un courant électrique.

Le dispositif de rappel magnétique de clapet suivant la présente invention comprend une intensité du courant électrique qui circule dans la bobine de fil conducteur qui est pilotée par un calculateur.

Le dispositif de rappel magnétique de clapet suivant la présente invention comprend une extrémité du conduit de stratification qui reçoit le siège d'ouverture de clapet qui est une pièce rapportée sur ledit conduit, constituée d'un matériau amagnétique.

Le dispositif de rappel magnétique de clapet suivant la présente invention comprend une face côté cavité qui comporte un évidement circulaire périphérique qui forme une chambre annulaire de distribution, le diamètre extérieur de la portée de clapet côté cavité étant inférieur ou égal au diamètre intérieur de ladite chambre annulaire.

Le dispositif de rappel magnétique de clapet suivant la présente invention comprend un diamètre de l'extrémité du conduit de stratification qui débouche dans la chambre de combustion qui est localement fortement réduit pour constituer un orifice d'étranglement des gaz, ladite extrémité formant ainsi avec la face côté chambre une chambre d'amortissement de clapet dont le volume est maximal lorsque la portée de clapet côté cavité est au contact du siège d'obturation de clapet avec lequel elle coopère.

Le dispositif de rappel magnétique de clapet suivant la présente invention comprend des diamètres extérieurs de la portée de clapet côté chambre et du siège d'ouverture de clapet qui sont proches du diamètre extérieur du clapet de stratification tandis que les diamètres intérieurs de ladite portée et dudit siège sont proches du diamètre de l'orifice d'étranglement des gaz.

La description qui va suivre en regard des dessins annexés et donnés à titre d'exemples non limitatifs permettra de mieux comprendre l'invention, les caractéristiques qu'elle présente. et les avantages qu'elle est susceptible de procurer :
Figure 1 est une vue en coupe schématique du dispositif de rappel magnétique de clapet suivant l'invention tel qu'il peut être installé dans la culasse d'un moteur à combustion interne.
Figure 2 est une vue en coupe schématique du dispositif de rappel magnétique de clapet suivant l'invention dont la source de champ magnétique est constituée d'un aimant permanent.
Figure 3 est une vue en coupe schématique du dispositif de rappel magnétique de clapet suivant l'invention dont la source de champ magnétique est constituée d'une bobine de fil conducteur dans laquelle peut circuler un courant électrique.
Figures 4 à 6 sont des vues rapprochées partielles en coupe schématique du dispositif de rappel magnétique de clapet suivant l'invention, lesdites vues illustrant certaines phases de fonctionnement dudit dispositif.

### DESCRIPTION DE L'INVENTION :

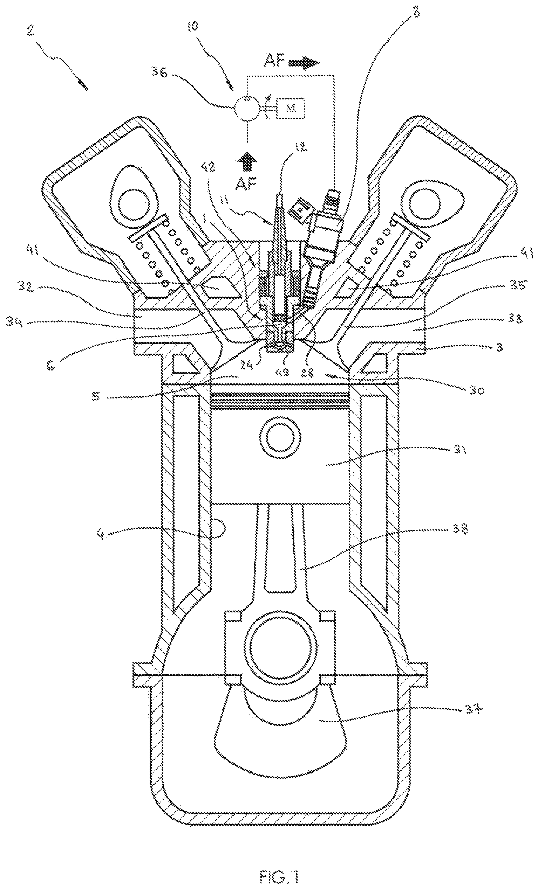

On a montré en figures 1 à 6 le dispositif de rappel magnétique de clapet 42 suivant l'invention, divers détails de ses composants, ses variantes, et ses accessoires.

Le dispositif de rappel magnétique de clapet 42 est spécialement prévu pour une préchambre d'allumage à clapet 1 telle que celle décrite dans la demande de brevet N° FR 1750264, ou pour une bougie d'allumage à électrode-navette telle que celle décrite dans la demande de brevet français N° FR 1662254.

On a vu en figure 1 que le dispositif de rappel magnétique de clapet 42 est notamment prévu pour un moteur à combustion interne 2 qui comporte une culasse 3 qui coiffe un cylindre 4 pour former avec un piston 31 une chambre de combustion 5 dans laquelle peut être introduite une charge principale 30. ladite culasse 3 recevant une cavité de stratification 6 dans laquelle débouche d'une part, un injecteur de stratification 8 qui peut injecter une charge pilote 9 et d'autre part, des moyens d'allumage 11.

On note que l'injecteur de stratification 8 peut être de tout type sans restriction, et être constitué de tout appareil capable d'introduire dans la cavité de stratification 6 selon quelque mode opératoire que ce soit une charge pilote 9 et ceci, que le mélange comburant-carburant AF que contient ladite charge 9 soit formé en amont ou en aval dudit injecteur de stratification 8 avec le concours éventuel d'un autre injecteur soit de gaz, soit de liquide, ou avec le concours d'un carburateur connu en soi.

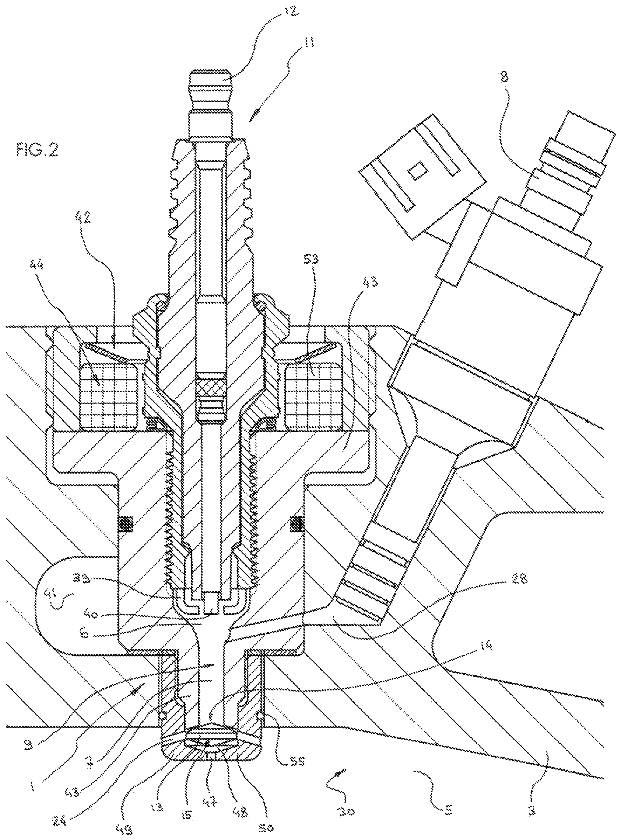

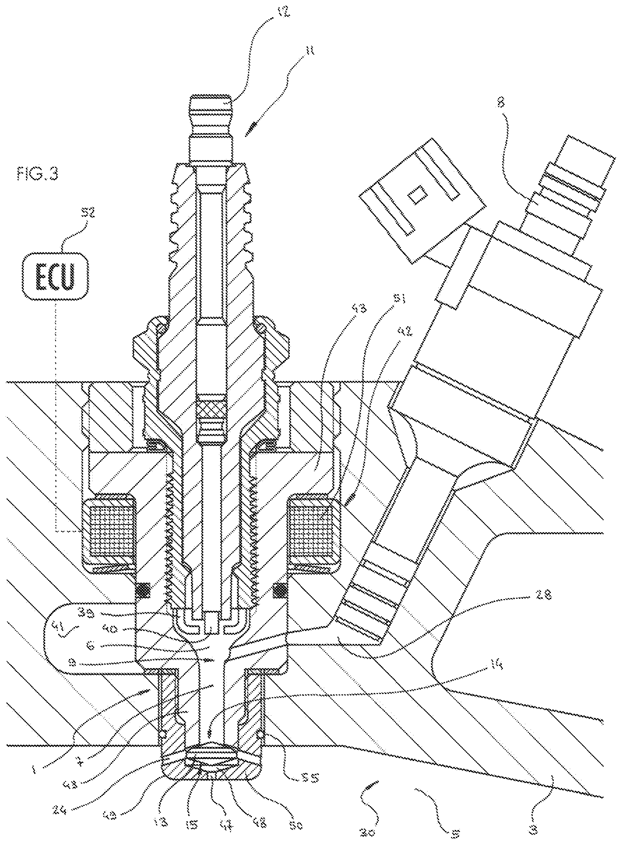

On remarque en figures 2 et 3 que la cavité de stratification 6 est reliée par un conduit de stratification 7 à la chambre de combustion 5 cependant qu'un clapet de stratification 13 peut soit obturer ledit conduit 7 et isoler la cavité de stratification 6 de la chambre de combustion 5 une face côté cavité 14 que présente ledit clapet 13 reposant alors sur un siège d'obturation de clapet 18 via une portée de clapet côté cavité 19, soit former avec ledit conduit 7 une préchambre d'allumage par torche 23 qui met en communication la cavité de stratification 6 avec la chambre de combustion 5 par l'intermédiaire d'au moins un orifice d'éjection des gaz 24 que comporte ladite préchambre 23, une face côté chambre 15 que présente ledit clapet 13 reposant en ce cas sur un siège d'ouverture de clapet 20 via une portée de clapet côté chambre 21 .

Les figures 2 à 6 montrent que le dispositif de rappel magnétique de clapet 42 suivant l'invention comprend au moins un matériau magnétique 43 qui constitue en tout ou partie le clapet de stratification 13 et le conduit de stratification 7, ledit matériau 43 pouvant être par exemple de l'acier ou du fer doux.

Les figures 2 à 6 montrent également que le dispositif de rappel magnétique de clapet 42 comprend au moins une source de champ magnétique 44 dont le flux magnétique 54 traverse le clapet de stratification 13 et le conduit de stratification 7 de sorte à magnétiser ledit clapet 13 et ledit conduit 7 afin que ledit conduit 7 et ledit clapet 13 s'attirent mutuellement, ce qui tend à plaquer la portée de clapet côté cavité 19 sur le siège d'obturation de clapet 18 avec lequel alle coopère.

Comme Illustré en figure 2, la source de champ magnétique 44 peut être un aimant permanent 53 connu en soi fait par exemple de ferrite, de Néodyme-fer-bore, de Samarium-Cobalt, ou d'Aluminium-Nickèl..cobalt.

A titre d'alternative montrée en figure 3, la source de champ magnétique 44 peut être une bobine de fil conducteur 51 dans laquelle peut circuler un courant électrique. En ce cas, l'intensité du courant électrique qui circule dans la bobine de fil conducteur 51 peut être pilotée par un calculateur 52 qui peut adapter la puissance de rappel du clapet de stratification 13 sur son siège d'obturation de clapet 18 ou piloter ledit rappel en tout ou rien, et ceci par exemple durant les sept cent vingt degrés de rotation de vilebrequin pendant lesquels se déroulent les quatre temps du moteur à combustion interne 2 et/ou tenant compte du régime et de la charge dudit moteur 2.

En figures 1 à 6, on a montré que l'extrémité du conduit de stratification 7 qui reçoit le siège d'ouverture de clapet 20 peut être une pièce rapportée 49 sur ledit conduit 7, constituée d'un matériau amagnétique 50 tel que l'inox ou l'lnconel, de sorte que le clapet de stratification 13 est attiré en direction du siège d'obturation de clapet 18 avec lequel elle coopère, et non en direction du siège d'ouverture de clapet 20.

A titre de variante du dispositif de rappel magnétique de clapet 42 suivant l'invention, la face côté cavité 14 peut comporter un évidement circulaire périphérique 45 qui forme une chambre annulaire de distribution 46.

En ce cas, le diamètre extérieur de la portée de clapet côté cavité 19 est inférieur ou égal au diamètre intérieur de ladite chambre annulaire 46 tandis que les gaz provenant de la cavité de stratification 6 se répartissent dans ladite chambre annulaire de distribution 46, avant d'être éjectés dans la chambre de combustion 5 via la préchambre d'allumage par torche 23 et les orifices d'éjection des gaz 2.4, ceci après que la charge pilote 9 ait été mise à feu par les moyens d'allumage 11.

On remarque que la chambre annulaire de distribution 46 permet de limiter la course du clapet de stratification 13 sans limiter significativement le débit de gaz qui s'établit depuis la cavité de stratification 6 en direction de la préchambre d'allumage par torche 23.

Ceci permet d'une part, de garder une force magnétique d'attraction suffisante entre le clapet de stratification 13 et le conduit de stratification 7 et d'autre part, de garantir que ledit clapet 13 se plaque toujours sur le siège d'obturation de clapet 18 parallèlement à ce dernier sans jamais pouvoir rester bloqué en travers du conduit de stratification 7 du fait qu'au niveau du siège d'obturation de clapet 18, les lignes de champ magnétique ne sont pas normales à la surface dudit siège 18.

On remarque en figures 1 à 6 que selon une variante du dispositif de rappel magnétique de clapet 42 suivant l'invention, le diamètre de l'extrémité du conduit de stratification 7 qui débouche dans la chambre de combustion 5 peut être localement fortement réduit pour constituer un orifice d'étranglement des gaz 47, ladite extrémité formant ainsi avec la face côté chambre 15 une chambre d'amortissement de clapet 48 dont le volume est maximal lorsque la portée de clapet côté cavité 19 est au contact du siège d'obturation de clapet 18 avec lequel elle coopère.

Selon cette variante, la chambre d'amortissement de clapet 48 est avantageusement prévue pour limiter la puissance du choc lorsque la portée de clapet côté chambre 21 entre en contact avec le siège d'ouverture de clapet 20 avec lequel elle coopère.

La limitation de la puissance de choc provient de ce que les gaz emprisonnés dans la chambre d'amortissement montent en pression sous l'effet du déplacement du clapet de stratification 13 en direction du siège d'ouverture de clapet 20, lesdits gaz freinant ainsi le clapet de stratification 13 avant de s'échapper par l'orifice d'étranglement des gaz 47.

A titre de raffinement de ladite variante, les diamètres extérieurs de la portée de clapet côté chambre 21 et du siège d'ouverture de clapet 20 peuvent être proches du diamètre extérieur du clapet de stratification 13 tandis que les diamètres intérieurs de ladite portée 21 et dudit siège 20 sont proches du diamètre de l'orifice d'étranglement des gaz 47.

On remarque que cette disposition particulière du dispositif de rappel magnétique de clapet 42 selon l'invention permet de maximiser l'efficacité de la chambre d'amortissement de clapet 48 à amortir les chocs survenant entre la portée de clapet côté chambre 21 et le siège d'ouverture de clapet 20 avec lequel elle coopère. Ceci résulte de l'effet de chasse des gaz qui survient entre ladite portée 21 et ledit siège 20 lorsque ces derniers sont très proches l'un de l'autre.

Les améliorations et perfectionnements qui viennent d'être décrits et que forme le dispositif de rappel magnétique de clapet selon l'invention 42 s'appliquent aux inventions des demandes de brevet FR 1750264 et FR 1662254 même lorsque lesdites inventions prennent la forme d'une bougie d'allumage qui intègre directement soit un clapet, soit une électrode-navette.

On remarquera que le dispositif de rappel magnétique de clapet 42 selon l'invention est particulièrement adapté aux culasses 3 réalisées en alliage d'aluminium amagnétique, répandues en automobile. En effet, appliqué à de telles culasses 3, le fonctionnement dudit dispositif 42 n'est que peu ou pas perturbé par son environnement.

### FONCTIONNEMENT DE L'INVENTION :

Le fonctionnement du dispositif de rappel magnétique de clapet 42 selon l'invention prévu pour une préchambre d'allumage à clapet 1 se comprend aisément à la vue des figures 1 à 6.

On voit en figure 1 que selon un exemple non-limitatif d'application du dispositif de rappel magnétique de clapet 42, ce dernier peut être mis en œuvre dans un moteur à combustion interne 2 qui présente une préchambre d'allumage á clapet 1 telle que décrite dans la demande de brevet N° FR 1750264.

On note que - comme illustré en figures 2 et 3 - ladite préchambre 1 inclut notamment une cavité de stratification 6 dans laquelle débouchent des moyens d'allumage 11 et un injecteur de stratification 8. un conduit de stratification 7, et un clapet de stratification 13.

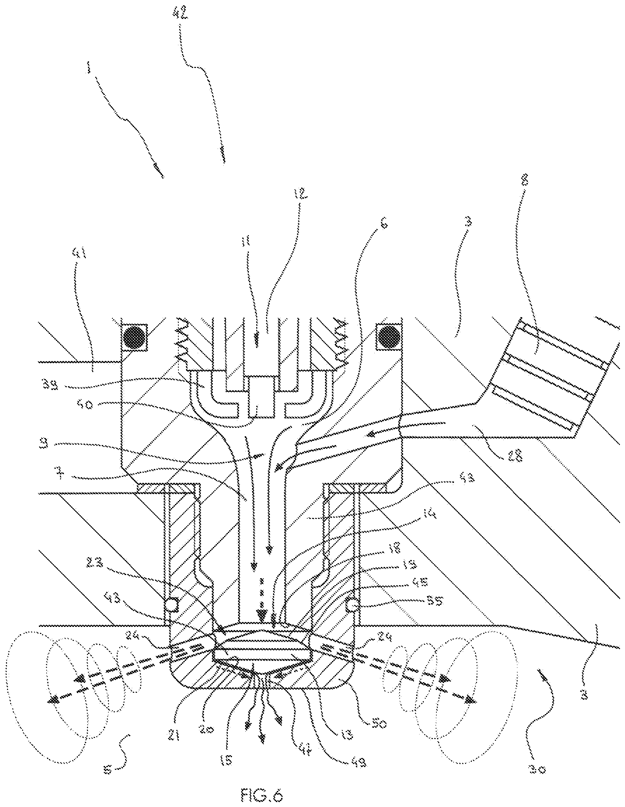

En figure 6, on remarque que le clapet de stratification 13 peut former une préchambre d'allumage par torche 23 avec le conduit de stratification 7, ladite préchambre 23 communiquant simultanément d'une part, avec la cavité de stratification 6, et d'autre part et par l'intermédiaire d'orifices d'éjection des gaz 24, avec une chambre de combustion 5 que comporte le moteur à combustion interne 2.

Outre ladite préchambre 1, on voit en figure 1 que ledit moteur 2 comprend une culasse 3 qui comporte des chambres d'eau de refroidissement 41 et qui coiffe un cylindre 4 pour former avec un piston 31 la chambre de combustion 5 dans laquelle peut être brûlée une charge principale 30.

On remarque en figure 1 que le piston 31 est relié à un vilebrequin 37 par l'intermédiaire d'une bielle 38, ledit piston 31 imprimant audit vilebrequin 37 un mouvement de rotation lorsque ledit piston 31 est animé d'un mouvement de translation alternatif dans le cylindre 4.

On voít également en figure 1 que la chambre de combustion 5 peut être mise en communication avec un conduit d'admission 32 par une soupape d'admission 34, ladite chambre 5 pouvant aussi être mise en communication avec un conduit d'échappement 33 par une soupape d'échappement 35.

Les figures 1 à 6 prises à titre d'exemple non-limitatif pour illustrer le fonctionnement du dispositif de rappel magnétique de clapet 42 selon l'invention montrent que les moyens d'allumage 11 sont constitués d'une bougie d'allumage 12 connue en soi dont les électrodes de masse 39 et l'électrode centrale 40 débouchent dans la cavité de stratification 6. On remarque aussi en figures 1 à 3 l'injecteur de stratification 8 qui peut injecter une charge pilote 9 dans la cavité de stratification 6 via un conduit de sortie d'injecteur 28.

En figure 1, on voit qu'un compresseur de stratification 36 forme des moyens de compression 10 pour mettre sous pression un mélange comburant-carburant AF facilement inflammable qui forme une charge pilote 9, cette dernière étant destinée à être injectée dans la cavité de stratification 6 par l'injecteur de stratification 8.

Le principe fondateur de la préchambre d'allumage à clapet 1 restant inchangé par rapport à celui décrit dans la demande de brevet N° FR 1750264, nous-nous concentrerons ici sur les particularités que confère le dispositif de rappel magnétique de clapet 42 selon l'invention au fonctionnement de ladite préchambre 1.

Pour détailler le fonctionnement du dispositif de rappel magnétique de clapet 42 selon l'invention, nous supposerons que la source de champ magnétique 44 est constituée d'un aimant permanent 53 comme illustré en figure 2.

Nous retíendrons en outre l'exemple de réalisation montré en figures 1 á 6 sur lesquelles on remarque que le siège d'ouverture de clapet 20 est une pièce rapportée 49 sur le conduit de stratification 7 ladite pièce 49 étant constituée d'un matériau amagnétique 50 - en l'occurrence de l'inox, cependant que la face côté cavité 14 du clapet de stratification 13 comporte un évidement circulaire périphérique 45 qui forme une chambre annulaire de distribution 46.

On remarque en figures 2 à 6 qu'avantageusement, la pièce rapportée 49 comporte une bague de refroidissement 55 qui lui permet de se refroídir efficacement au contact de la culasse 3, ladite bague 55 formant un pont thermique entre ladite pièce 49 et ladite culasse 3.

On notera en figures 2 à 6 qu'au moins la cavité de stratification 6 et le conduit de stratification 7 peuvent être réalisés dans une même pièce de matériau magnétique 43 dont la paroi extérieure est en tout ou partie en contact avec un liquide de refroidissement qui circule dans les chambres d'eau de refroidissement 41 aménagées dans la culasse 3.

Pour illustrer le fonctionnement du dispositif de rappel magnétique de clapet 42, nous retiendrons également la configuration particulière que montrent les figures 1 à 6 selon laquelle le diamètre de l'extrémité du conduit de stratification 7 qui débouche dans la chambre de combustion 5 est localement fortement réduit pour constituer un orifice d'étranglement des gaz 47 qui forme, avec ledit conduit 7 et la face côté chambre 15 du clapet de stratification 13, une chambre d'amortissement de clapet 48.

Nous retiendrons d'ailleurs la variante de ladite configuration qui prévoit que les diamètres extérieurs de la portée de clapet côté chambre 21 et du siège d'ouverture de clapet 20 sont proches du diamètre extérieur du clapet de stratification 13 tandis que les diamètres intérieurs de ladite portée 21 et dudit siège 20 sont proches du diamètre de l'orifice d'étranglement des gaz 47.

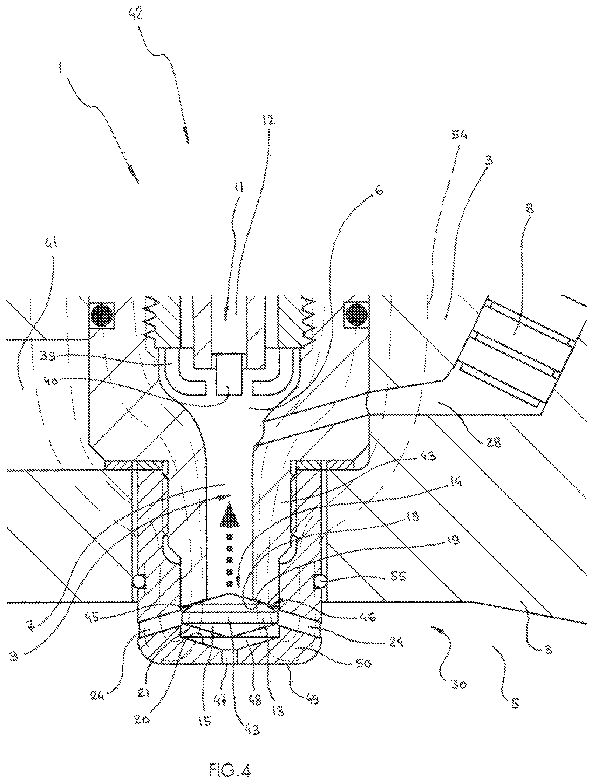

La figure 4 illustre que selon le dispositif de rappel magnétique de clapet 42 suivant l'invention, le flux magnétique 54 - ici symbolisé par des traits en pointillés longs - est canalisé par le matériau magnétique 43 dont sont faits le clapet de stratification 13 et le conduit de stratification 7, en l'occurrence et selon cet exemple non-limitatif, de l'acier.

Ainsi magnétisés, le clapet de stratification 13 et le conduit de stratification 7 s'attirent l'un l'autre de sorte que ledit clapet 13 a une tendance naturelle á venir se plaquer sur le siège d'obturation de clapet 18 avec lequel il coopère.

L'extrémité du conduit de stratification 7 qui reçoit le siège d'ouverture de clapet 20 étant une pièce rapportée 49 constituée d'un matériau amagnétique 50, le clapet de stratification 13 est attiré seulement en direction du siège d'obturation de clapet 18 avec lequel elle coopère, et non en direction du siège d'ouverture de clapet 20.

Il résulte du dispositif de rappel magnétique de clapet 42 suivant l'invention que contrairement á ce qui est décrit dans la demande de brevet N° FR 1750264. ce n'est plus uniquement parce que la pression qui régne dans la chambre de combustion 11 est supérieure à celle régnant dans la cavité de stratification 6 que le clapet de stratification 13 vient obturer le conduit de stratification 7, mais aussi parce que ledit clapet 13 y est invité par le champ magnétique auquel le soumet l'aimant permanent 53, ce que montre clairement la figure 4.

Tenant compte de ce qui prècède, on constate que le dispositif de rappel magnétique de clapet 42 suivant l'invention permet de déterminer, d'une part, le volume total formé par la cavité de stratification 6 et le conduit de stratification 7, et d'autre part, le diamètre des orifices d'éjection des gaz 24, ceci sur la seul critère de meilleur rendement du moteur à combustion interne 2 et non plus sur un critère de manœuvrabilité du clapet de stratification 13.

Ainsi, ces choix peuvent être faits sans que ne soit excessivement déterminante la différence de pression nécessaire à l'obturation par le clapet de stratification 13 du conduit de stratification 7 notamment lorsque débute la compression de la charge principale 30 préalablement admise dans la chambre de combustion 5 par la soupape d'admission 34.

Outre une grande liberté d'optimiser le rendement du moteur à combustion interne 2, il résulte du dispositif de rappel magnétique de clapet 42 suivant l'invention une moindre sensibilité du fonctionnement du clapet de stratification 13 à la vitesse de rotation dudit moteur 2, l'obtention de la différence de pression nécessaire à l'obturation par ledit clapet 13 du conduit de stratification 7 étant selon la demande de brevet N° FR 1750264 en grande partie dépendante de ladite vitesse.

Ainsi et comme on peut le déduire aísément de la figure 4, le dispositif de rappel magnétique de clapet 42 suivant l'invention prévoit que l'obturation par le clapet de stratification 13 du conduit de stratification 7 résulte non seulement de la différence de pression entre celle régnant dans la chambre de combustion 5 et celle régnant dans la cavité de stratification 6 comme le prévoit l'invention décrite dans la demande de brevet N° FR 1750264, mais aussi de l'effort de rappel magnétique qu'exerce l'aimant permanent 53 sur le clapet de stratification 13.

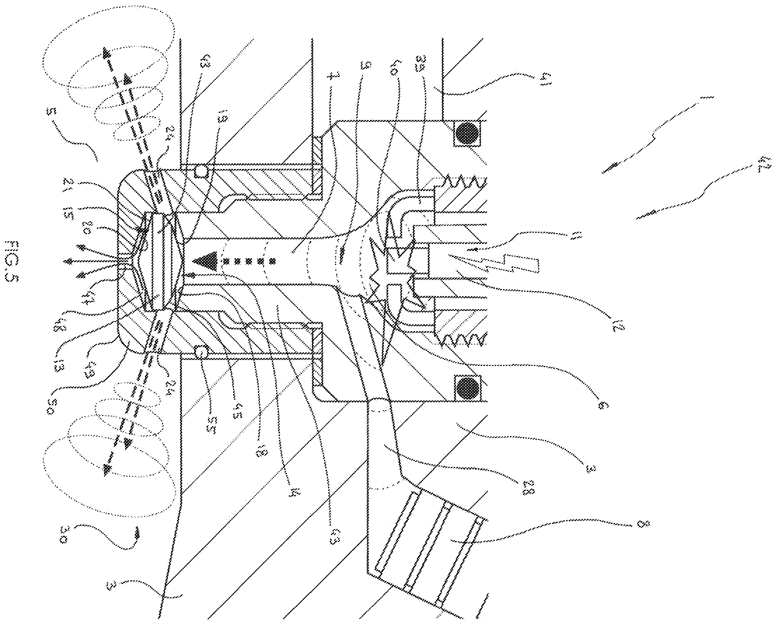

On note que l'effort de rappel magnétique n'a pratiquement aucun effet sur la bonne ouverture par le clapet de stratification 13 du conduit de stratification 7 lors de la mise à feu de la charge pilote 9 par la bougie d'allumage 12 telle qu'illustrèe en figure 5. En effet, consécutivement à ladite mise à feu, l'effort auquel la pression des gaz de combustion contenus dans la cavité de stratification 6 soumet la face côté cavité 14 dudit clapet 13 est considérablement plus élevé que l'effort de rappel magnétique qu'exerce l'aimant permanent 53 sur ledit clapet 13.

On remarque que la moindre dépendance de la fermeture du conduit de stratification 7 par le clapet de stratification 13 á la différence entre la pression exercée sur la face côté cavité 14 et celle exercée sur la face côté chambre 15 dudit clapet 13 permet également de déterminer plus librement le diamètre de la terminaison du conduit de stratification 7 qui débouche dans la chambre de combustion 5.

En effet, l'invention relative à la demande de brevet N° FR 1750264 requiert que la face côté chambre 15 expose une surface la plus grande possible à la pression des gaz contenus dans la chambre de combustion 5 pour permettre la bonne manœuvre du clapet de stratification 13 lorsqu'il doit obturer le conduit de stratification 7 notamment lorsque débute la compression de la charge principale 30 préalablement admise dans la chambre de combustion 5 via la soupape d'admission 34. Pour cela, il est nécessaire de réduire autant que possible la longueur radiale du siège d'ouverture de clapet 20 avec lequel coopère la portée de clapet côté chambre 21.

Dans la mesure où le rappel en obturation du conduit de stratification 7 du clapet de stratification 13 n'est plus que marginalement dépendant de la pression des gaz et est majoritairement assuré par la force d'attraction magnétique générée par l'aimant permanent 53, il devient possible de réduire fortement la surface exposée à la pression des gaz de la face côté chambre 15 lorsque la portée de clapet côté chambre 21 est au contact du siège d'ouverture de clapet 20 avec lequel elle coopère. Ceci est obtenu en augmentant fortement la longueur radiale du siège d'ouverture de clapet 20, au point qu'il ne reste plus de l'extrémité du conduit de stratification 7 qui débouche dans la chambre de combustion 5 qu'un orifice d'étranglement des gaz 47 de petit diamètre comme le montrent les figures 1 à 6.

Cette configuration particulière rendue possible par le dispositif de rappel magnétique de clapet 42 suivant l'invention permet de former une chambre d'amortissement de clapet 48 dont le volume est maximal lorsque la portée de clapet côté cavité 19 est au contact du siège d'obturation de clapet 18 avec lequel elle coopère comme le montrent les figures 1 à 4.

On note que la chambre d'amortissement de clapet 48 est une conséquence avantageuse du dispositif de rappel magnétique de clapet 42 suivant l'invention, ladite chambre 48 étant décisive pour conférer au clapet de stratification 13 une robustesse et une durée de vie élevées.

En effet, comme l'illustre la figure 5, lorsque consécutivement à la mise à feu de la charge pilote 9 par la bougie d'allumage 12 le clapet de stratification 13 se déplace en direction du siège d'ouverture de clapet 20, ledit clapet 13 expulse vers la chambre de combustion 5 les gaz contenus dans la chambre d'amortissement de clapet 48 via l'orifice d'étranglement des gaz 47.

Ce faisant, ledit clapet 13 provoque un « effet de chasse » qui expulse les gaz emprisonnés entre la portée de clapet côté chambre 21 et le siège d'ouverture de clapet 20 en direction de l'orifice d'étranglement des gaz 47. Ledit « effet de chasse » freine ledit clapet 13.

En outre, l'orifice d'étranglement des gaz 47 freine l'écoulement des gaz depuis la chambre d'amortissement de clapet 48 vers la chambre de combustion 5 ce qui participe au freinage du clapet de stratification 13.

On remarque que le freinage du clapet de stratification 13 qui résulte de « l'effet de chasse » et de l'étranglement des gaz est d'autant plus intense que la portée de clapet côté chambre 21 est proche du siège d'ouverture de clapet 20 avec lequel elle coopère.

Cette particularité permet, dans un premier temps illustré en figure 5. d'assurer un déplacement rapide du clapet de stratification 13 en direction du siège d'ouverture de clapet 20 pour former la préchambre d'allumage par torche 23 et éjecter via les orifices d'éjection des gaz 24 les gaz brûlants qui résultent de la combustion de fa charge pilote 9, ceci pour allumer la charge principale 30. Dans un deuxièmement temps montré en figure 6, ladite particularité assure une repose en douceur de la portée de clapet côté chambre 21 sur le siège d'ouverture de clapet 20, ceci pour conférer au clapet de stratification 13 une durabilité maximale.

On note que pour revenir au contact du siège d'obturation de clapet 18 par l'intermédiaire de sa portée de clapet côté cavité 19, le clapet de stratification 13 dispose de beaucoup de temps car dès que la charge pilote 9 a fini de brúler et que l'essentiel des gaz qui la composaient a été éjecté sous forme de torches portées à haute température via les orifice d'éjection des gaz 24, la pression qui règne dans la chambre de combustion 5 devient rapidement supérieure à celle qui règne dans la cavité de stratification 6.

Ainsi, sous l'effet conjugué de cette différence de pression et de l'effort de rappel magnétique qu'exerce l'aimant permanent 53 sur le clapet de stratification 13, ce dernier revient en quelques degrés de rotation de vilebrequin 37 au contact du siège d'obturation de clapet 18 par l'intermédiaire de sa portée de clapet côté cavité 13

Ensuite et tant que la mise á feu d'une nouvelle charge pilote 9 n'est pas déclenchée, le clapet de stratification 13 peut légèrement s'entrebâiller pour laisser passer quelques millimètres cube de gaz depuis le conduit de stratification 7 vers la chambre de combustion 5, mais sans s'ouvrir totalement. Il résulte de cette situation que le clapet de stratification 13 reste principalement au contact du siège d'obturation de clapet 18, prêt à recommencer un cycle thermodynamique à quatre temps du moteur à combustion interne 2, cycle dont on peut considérer qu'il débute au moment ou une nouvelle charge principale 30 est introduite dans la chambre de combustion 5 par la soupape d'admission 34.

On remarque qu'en maintenant le clapet de stratification 13 l'essentiel du temps au contact du siège d'obturation de clapet 18 avec lequel il coopère, le dispositif de rappel magnétique de clapet 42 suivant l'invention limite l'intrusion de gaz brûlés résiduels de la charge principale 30 dans la cavité de stratification 6 en début de compression de ladite charge 30. Ceci est favorable à une efficacité maximale de la charge pilote 9 á allumer la charge principale 30.

Comme exposé précédemment, la face côté cavité 14 peut avantageusement comporter un évidement circulaire périphérique 45 qui forme une chambre annulaire de distribution 46. le diamètre extérieur de la portée de clapet côté cavité 19 étant alors inférieur ou égal au diamètre intérieur de ladite chambre annulaire 46. La chambre annulaire de distribution 46 dont il est question est particulièrement visible en figure 4.

Cette configuration particulière du dispositif de rappel magnétique de clapet 42 suivant l'invention permet de limiter la course du clapet de stratification 13 sans limiter significativement le débit de gaz qui s'établit consécutivement á la mise à feu de la charge pilote 9 depuis la cavité de stratification 6 vers la préchambre d'allumage par torche 23.

La force d'attraction magnétique qu'exerce le conduit de stratification 7 sur le clapet de stratification 13 étant approximativement inversement proportionnelle au carré de la distance qui sépare ledit clapet 13 dudit conduit 7, réduire de trente pour cent la course dudit clapet 13 permet de doubler ladite force à même puissance de l'aimant permanent 53 lorsque la portée de clapet côté chambre 21 est au contact du siège d'ouverture de clapet 20 avec lequel elle coopère.

En outre, la réduction de la course du clapet de stratification 13 qu'autorise la chambre annulaire de distribution 46 sans compromettre le bon écoulement des gaz permet de garantir que ledit clapet 13 se plaque toujours sur le siège d'obturation de clapet 18 avec lequel il coopère parallèlement à ce dernier sans risquer de rester bloqué en travers du conduit de stratification 7 du fait qu'au niveau du siège d'obturation de clapet 18, les lignes de champ magnétique ne sont pas normales à la surface dudit siège 18.

On remarque que le dispositif de rappel magnétique de clapet 42 selon l'invention ne minore en non les performances des inventions relatives aux demandes de brevet FR 1750264 et FR 1662254 auxquelles il s'applique avantageusement Au contraire, il en améliore substantiellement l'efficacité.

On note aussi que le dispositif de rappel magnétique de clapet 42 selon l'invention peut s'appliquer à d'autres domaines que les seuls moteurs à combustion interne tels que les cloueurs à gaz, les armes à feu, ou tout autre appareil nécessitant la mise à feu d'une charge principale au moyen d'une charge pilote avec la meilleure efficacité possible.

## Revendications

1. Dispositif de rappel magnétique de clapet (42) pour une préchambre d'allumage à clapet (1) pour moteur à combustion interne (2) ce dernier comportant une culasse (3) qui coiffe un cylindre (4) pour former avec un piston (31) une chambre de combustion (5) dans laquelle peut être introduite une charge principale (30), ladite culasse (3) recevant une cavité de stratification (6) dans laquelle débouche d'une part, un injecteur de stratification (8) qui peut injecter une charge pilote (9) et d'autre part, des moyens d'allumage (11), ladite cavité (6) étant reliée par un conduit de stratification (7) à la chambre de combustion (5) cependant qu'un clapet de stratification (13) peut soit obturer ledit conduit (7) et isoler la cavité de stratification (6) de la chambre de combustion (5) une face côté cavité (14) que présente ledit clapet (13) reposant alors sur un siège d'obturation de clapet (18) via une portée de clapet côté cavité (19), soit former avec ledit conduit (7) une préchambre d'allumage par torche (23) qui met en communication la cavité de stratification (6) avec la chambre de combustion (5) par l'intermédiaire d'au moins un orifice d'éjection des gaz (24) que comporte ladite préchambre (13), une face côté chambre (15) que présente ledit clapet (13) reposant en ce cas sur un siège d'ouverture de clapet (20) via une portée de clapet côté chambre (21), **caractérisé en ce qu**'il comprend :
• Au moins un matériau magnétique (43) qui constitue en tout ou partie le clapet de stratification (13) et le conduit de stratification (7) ;
• Au moins une source de champ magnétique (44) dont le flux magnétique (54) traverse le clapet de stratification (13) et le conduit de stratification (7) de sorte à magnétiser ledit clapet (13) et ledit conduit (7).

2. Dispositif de rappel magnétique de clapet suivant la revendication 1, **caractérisé en ce que** la source de champ magnétique (44) est un aimant permanent (53).

3. Dispositif de rappel magnétique de clapet suivant la revendication 1. **caractérisé en ce que** la source de champ magnétique (44) est une bobine de fil conducteur (51) dans laquelle peut circuler un courant électrique.

4. Dispositif de rappel magnétique de clapet suivant la revendication 3, **caractérisé en ce que** l'intensité du courant électrique qui circule dans la bobine de fil conducteur (51) est pilotée par un calculateur (52).

5. Dispositif de rappel magnétique de clapet suivant la revendication 1, **caractérisé en ce que** l'extrémité: du conduit de stratification (7) qui reçoit le siège d'ouverture de clapet (20) est une pièce rapportée (49) sur ledit conduit (7), constituée d'un matériau amagnétique (50).

6. Dispositif de rappel magnétique de clapet suivant la revendication 1 . **caractérisé en ce que** la face côté cavité (14) comporte un évidement circulaire périphérique (45) qui forme une chambre annulaire de distribution (46), le diamètre extérieur de la portée de clapet côté cavité (19) étant inférieur ou égal au diamètre intérieur de ladite chambre annulaire (46).

7. Dispositif de rappel magnétique de clapet suivant la revendication 1, **caractérisé en ce que** le diamètre de l'extrémité du conduit de stratification (7) qui débouche dans la chambre de combustion (5) est localement fortement réduit pour constituer un orifice d'étranglement des gaz (47), ladite extrémité formant ainsi avec la face côté chambre (15) une chambre d'amortissement de clapet (48) dont le volume est maximal lorsque la portée de clapet côté cavité (19) est au contact du siège d'obturation de clapet (18) avec lequel elle coopère.

8. Dispositif de rappel magnétique de clapet suivant la revendication 7, **caractérisé en ce que** les diamètres extérieure de la portée de clapet côté chambre (21) et du siège d'ouverture de clapet (20) sont proches du diamètre extérieur du clapet de stratification (13) tandis que les diamètres intérieurs de ladite portée (21) et dudit siège (20) sont proches du diamètre de l'orifice d'étranglement des gaz (47).

## Patentansprüche

1. Magnetische Ventilrückstellvorrichtung (42) für eine Zündvorkammer mit Ventil (1) für einen Verbrennungsmotor (2), wobei letzterer einen Zylinderkopf (3) aufweist, der auf einem Zylinder (4) sitzt, um mit einem Kolben (31) eine Brennkammer (5) zu bilden, in welche ein Hauptbeschickungsgut (30) eingeleitet werden kann, wobei der Zylinderkopf (3) einen Schichtbildungshohlraum (8) aufnimmt, in welchen einerseits ein Schichtbildungsinjektor (8), der ein Pilotbeschickungsgut (9) einspritzen kann, und andererseits Zündmittel (11) einmünden, wobei der Hohlraum (6) mittels einer Schichtbildungsleitung (7) mit der Brennkammer (5) verbunden ist, während ein Schichtbildungsventil (13) entweder die Leitung (7) verschließen und den Schichtbildungshohlraum (6) von der Brennkammer (5) isolieren kann, wobei eine hohlraumseitige Fläche (14), mit welcher das Ventil (13) versehen ist, mit einer hohlraumseitigen Ventilauflagefläche (19) auf einem Ventilsitz im geschlossenen Zustand (18) aufliegt, oder mit der Leitung (7) eine Vorkammer (23) zum Zünden mittels Brenner bildet, welche den Schichtbildungshohlraum (8) über mindestens eine Gasabführungsöffnung (24), mit welcher die Vorkammer (23) versehen ist, mit der Brennkammer (5) verbindet, wobei eine kammerseitige Fläche (15), mit welcher das Ventil (13) versehen ist, in diesem Falle mit einer kammerseitigen Ventilauflagefläche (21) auf einem Ventilsitz im geöffneten Zustand (20) aufliegt, **dadurch gekennzeichnet, dass** sie Folgendes umfasst:
• mindestens ein magnetisches Material (43), aus welchem das Schichtbildungsventil (13) und die Schichtbildungsleitung (7) vollständig oder teilweise bestehen;
• mindestens eine Magnetfeldquelle (44), deren magnetischer Fluss (54) das Schichtbildungsventil (13) und die Schichtbildungsleitung (13) derart durchsetzt, dass das Ventil (13) und die Leitung (7) magnetisiert werden.

2. Magnetische Ventilrückstellvorrichtung gemäß Anspruch 1, **dadurch gekennzeichnet, dass** es sich bei der Magnetfeldquelle (44) um einen Permanentmagneten (53) handelt.

3. Magnetische Ventilrückstellvorrichtung gemäß Anspruch 1, **dadurch gekennzeichnet, dass** es sich bei der Magnetfeldquelle (44) um eine Leiterdrahtspule (51) handelt, in welcher ein elektrischer Strom fließen kann.

4. Magnetische Ventilrückstellvorrichtung gemäß Anspruch 3, **dadurch gekennzeichnet, dass** die Stärke des elektrischen Stroms, welcher durch die Leiterdrahtspule (51) fließt, von einem Steuergerät (52) gesteuert wird.

5. Magnetische Ventilrückstellvorrichtung gemäß Anspruch 1, **dadurch gekennzeichnet, dass** es sich bei dem Ende der Schichtbildungsleitung (7), welches den Ventilsitz im geöffneten Zustand (20) aufnimmt, um ein Teil (49) handelt, das an die Leitung (7) angeformt ist, wobei es aus einem nicht-magnetischen Material (50) besteht.

6. Magnetische Ventilrückstellvorrichtung gemäß Anspruch 1, **dadurch gekennzeichnet, dass** die hohlraumseitige Fläche (14) eine randständige kreisförmige Aussparung (45) aufweist, die eine ringförmige Verteilungskammer (46) bildet, wobei der Außendurchmesser der hohlraumseitigen Ventilauflagefläche (19) kleiner oder gleich dem Innendurchmesser der ringförmigen Kammer (46) ist.

7. Magnetische Ventilrückstellvorrichtung gemäß Anspruch 1, **dadurch gekennzeichnet, dass** der Durchmesser desjenigen Endes der Schichtbildungskammer (7), das in die Brennkammer (5) einmündet, örtlich begrenzt stark verringert ist, um eine Gasdrosselöffnung (47) zu bilden, wobei dasjenige Ende, welches auf diese Weise mit der kammerseitigen Fläche (15) eine Ventilpufferungskammer (48) bildet, deren Volumen am größten ist, wenn die hohlraumseitige Ventilauflagefläche (19) mit dem Ventilsitz im geschlossenen Zustand (18) in Kontakt ist, mit welchem es zusammenwirkt.

8. Magnetische Ventilrückstellvorrichtung gemäß Anspruch 7, **dadurch gekennzeichnet, dass** die Außendurchmesser der kammerseitigen Ventilauflagefläche (21) und des Ventilsitzes im geöffneten Zustand (20) näherungsweise gleich dem Außendurchmesser des Schichtbildungsventils (13) sind, während die Innendurchmesser der Auflagefläche (21) und des Sitzes (20) näherungsweise gleich dem Durchmesser der Gasdrosselöffnung (47) sind.

## Claims

1. A magnetic valve recoil device (42) for a valve-type ignition pre-chamber (1) for an internal combustion engine (2), said engine comprising a cylinder head (3) sitting on top of a cylinder (4) in order to form, together with a piston (31), a combustion chamber (5) into which a primary charge (30) may be introduced, said cylinder head (3) receiving a stratification cavity (6) to which, on the one hand, a stratification injector (8), which can inject an initiator charge (9), and, on the other hand, ignition means (11) lead, said cavity (6) being connected by a stratification pipe (7) to the combustion chamber (5) while a stratification valve (13) can either close said pipe (7) and isolate the stratification cavity (6) from the combustion chamber (5), with a cavity-side surface (14) of said valve (13) then resting on a valve closing seat (18) by means of a cavity-side valve bearing surface (19), or form, together with said pipe (7), a torch ignition pre-chamber (23) that causes the stratification cavity (6) to communicate with the combustion chamber (5) by means of at least one gas ejection orifice (24) that said pre-chamber (23) includes, with a chamber-side surface (15) of said valve (13) resting in this case on a valve opening seat (20) by means of a chamber-side valve bearing surface (21), **characterized in that** said device comprises:
• At least one magnetic material (43) constituting in whole or in part the stratification valve (13) and the stratification pipe (7);
• At least one source of a magnetic field (44) the magnetic flux (54) of which passes through the stratification valve (13) and the stratification pipe (7) so as to magnetize said valve (13) and said pipe (7).

2. A magnetic valve recoil device according to claim 1, **characterized in that** the magnetic field source (44) is a permanent magnet (53).

3. A magnetic valve recoil device according to claim 1, **characterized in that** the magnetic field source (44) is a coil of conductive wire (51) through which an electric current can flow.

4. A magnetic valve recoil device according to claim 3, **characterized in that** the amperage of the electric current flowing through the coil of conductive wire (51) is controlled by a computer (52).

5. A magnetic valve recoil device according to claim 1, **characterized in that** the end of the stratification pipe (7) which receives the valve opening seat (20) is a part (49) that is added to said pipe (7) and consists of a non-magnetic material (50).

6. A magnetic valve recoil device according to claim 1, **characterized in that** the cavity-side surface (14) comprises a circular peripheral recess (45) forming an annular distribution chamber (46), with the outside diameter of the cavity-side valve bearing surface (19) being equal to or less than the inside diameter of said annular chamber (46).

7. A magnetic valve recoil device according to claim 1, **characterized in that** the diameter of the end of the stratification pipe (7) leading to the combustion chamber (5) is greatly reduced locally so as to form a gas throttling orifice (47), said end thus forming, together with the chamber-side surface (15), a valve damping chamber (48) having a maximum volume when the cavity-side valve bearing surface (19) is in contact with the valve closing seat (18) with which it cooperates.

8. A magnetic valve recoil device according to claim 7, **characterized in that** the outside diameters of the chamber-side valve bearing surface (21) and the valve opening seat (20) are close to the outside diameter of the stratification valve (13), while the inside diameters of said bearing surface (21) and said seat (20) are close to the diameter of gas throttling orifice (47).
